# EUROPEAN PATENT APPLICATION

(11) **EP 4 606 455 A1**
(43) Date of publication of application: **27.08.2025**
(21) Application number: 22962717.9
(22) Date of filing: 19.10.2022
(51) Int. Cl.: B01D 53/02, B01D 53/14

(54) **CARBON DIOXIDE RECOVERY METHOD**

(71) Applicant: MITSUBISHI ELECTRIC CORPORATION, Chiyoda-ku Tokyo 100-8310 (JP)
(72) Inventor: SHINOKI, Toshio, Tokyo 100-8310 (JP); ONAKA, Yoji, Tokyo 100-8310 (JP); TANISHIMA, Makoto, Tokyo 100-8310 (JP); INOUE, Takumi, Tokyo 100-8310 (JP)
(74) Representative: Meissner Bolte Partnerschaft mbB
(86) International application number: PCT/JP2022/038851
(87) International publication number: WO 2024/084605

(57) **Abstract**

A carbon dioxide recovery method according to the present invention includes a step of having an absorbing material (4) absorb carbon dioxide from a carbon dioxide-containing gas, a step of introducing the absorbing material (4) that has absorbed the carbon dioxide into sewage, and a step of recovering the carbon dioxide from the absorbing material (4) introduced into the sewage.

## Description

### Technical Field

The present invention relates to a carbon dioxide recovery method.

### Background Art

Patent Document 1 discloses a direct air capture (DAC) technology for recovering carbon dioxide from air.

### Citation List

### Patent Documents

Patent Document 1: Japanese Unexamined Patent Application, First Publication JP 2021 - 169 079 A

### Summary of the Invention

### Problem to be Solved by the Invention

In the technology, there is a possibility that recovery efficiency of carbon dioxide is lowered. Therefore, there is a demand for improvement in the recovery efficiency of carbon dioxide.

In view of the above circumstances, an object of the present invention is to provide a carbon dioxide recovery method capable of improving recovery efficiency of carbon dioxide.

### Means to Solve the Problem

According to one aspect of the present invention, there is provided a carbon dioxide recovery method including a step of having an absorbing material absorb carbon dioxide from a carbon dioxide-containing gas, a step of introducing the absorbing material that has absorbed the carbon dioxide into sewage, and a step of recovering the carbon dioxide from the absorbing material introduced into the sewage.

### Effects of the Invention

According to the present invention, it is possible to provide a carbon dioxide recovery method capable of improving recovery efficiency of carbon dioxide.

### Brief Description of Drawings

FIG. 1 A schematic diagram of a carbon dioxide collection device used in a carbon dioxide recovery method according to Embodiment 1.
FIG. 2 A schematic diagram showing the carbon dioxide recovery method according to Embodiment 1.
FIG. 3 A schematic diagram of a carbon dioxide recovery system capable of implementing the carbon dioxide recovery method according to Embodiment 1.
FIG. 4 A schematic diagram of a first example of the carbon dioxide recovery system.
FIG. 5 A schematic diagram of a second example of the carbon dioxide recovery system.
FIG. 6 A schematic diagram showing a carbon dioxide recovery method according to Embodiment 2.
FIG. 7 A schematic diagram showing a carbon dioxide recovery method according to Embodiment 3.
FIG. 8 A schematic diagram showing a carbon dioxide recovery method according to Embodiment 4.
FIG. 9 A schematic diagram showing a carbon dioxide recovery method according to Embodiment 5.
FIG. 10 A schematic diagram showing a carbon dioxide recovery method according to Embodiment 6.
FIG. 11 A schematic diagram showing a carbon dioxide recovery method according to Embodiment 6.

### Description of Embodiments

Hereinafter, embodiments of the present invention will be described with reference to the drawings. The scope of the present invention is not limited to the following embodiments, and can be changed in any way within the scope of technical ideas of the present invention.

### Embodiment 1.

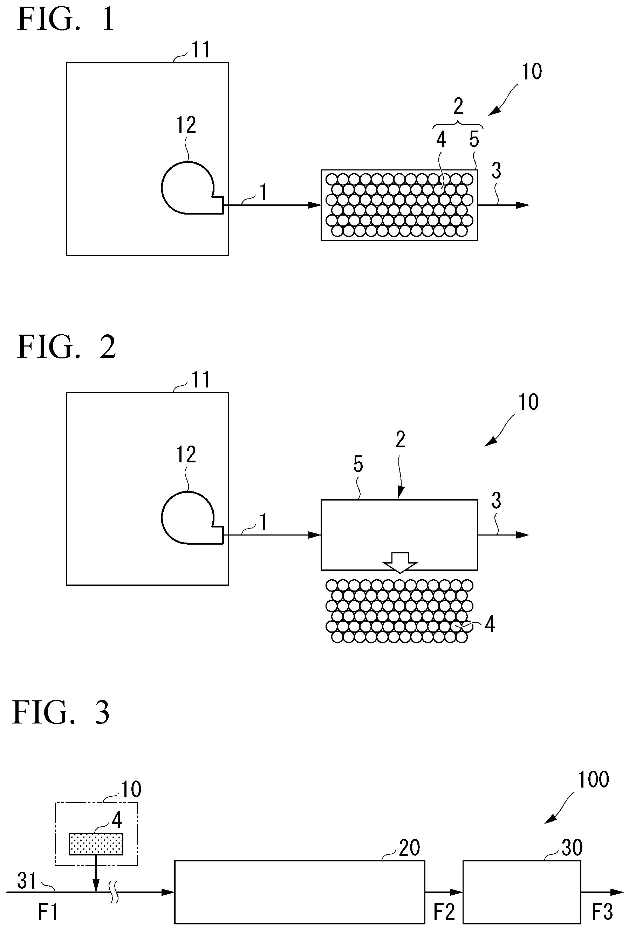

FIG. 1 is a schematic diagram of a carbon dioxide collection device 10 used in a carbon dioxide recovery method according to Embodiment 1. As shown in FIG. 1, the carbon dioxide collection device 10 includes a supply path 1, a carbon dioxide absorption section 2, and a discharge path 3.

One end of the supply path 1 is connected to a ventilation device 12 for indoor ventilation of a building 11. The other end of the supply path 1 is connected to the carbon dioxide absorption section 2. The supply path 1 guides an exhaust gas (carbon dioxide-containing gas) discharged from the ventilation device 12 to the carbon dioxide absorption section 2. The ventilation device 12 has a fan (blower) that supplies air.

The carbon dioxide absorption section 2 includes an absorbing material 4 and an exterior body 5.

The absorbing material 4 absorbs carbon dioxide contained in the exhaust gas (carbon dioxide-containing gas). The absorbing material 4 may be a liquid absorbing material or a solid absorbing material. The absorbing material 4 can absorb carbon dioxide contained in the carbon dioxide-containing gas to separate the carbon dioxide from other components of the exhaust gas.

The liquid absorbing material 4 can, for example, chemically adsorb or physically adsorb carbon dioxide. Examples of the liquid absorbing material 4 include amines. Examples of the amines include an aliphatic amine, a polyamine, a polyimine, a cyclic amine, and an amidine compound. As the liquid absorbing material 4, an aqueous solution of an alkali metal hydroxide can also be used. Examples of the alkali metal hydroxide include sodium hydroxide and potassium hydroxide. The absorbing material 4 may be used in a form of an aqueous solution.

The solid absorbing material 4 can, for example, physically adsorb or chemically adsorb carbon dioxide. Examples of the solid absorbing material 4 that physically adsorbs carbon dioxide include zeolite, activated carbon, diatomite, alumina, and silica gel. The solid absorbing material 4 may be granular, powdery, or the like. The granular shape is, for example, a bead shape (spherical) or a pellet shape (cylindrical). When a powdery absorbing material 4 is used, the absorbing material 4 may be supported on a surface of a carrier. Examples of the absorbing material 4 that chemically adsorbs carbon dioxide include an absorbing material in which amines, an alkali metal hydroxide, or the like is supported on a porous body such as activated carbon. As the absorbing material 4 that chemically adsorbs carbon dioxide, calcium oxide may be used.

The exterior body 5 accommodates the absorbing material 4 so as to be capable of taking out the absorbing material 4 therefrom. The exterior body 5 includes, for example, a body portion having an opening and a lid portion that closes the opening in an openable and closable manner.

The discharge path 3 discharges the exhaust gas from which at least a part of carbon dioxide has been removed by the carbon dioxide absorption section 2 to an outside of a system.

The building 11 is an example of a supply source of the carbon dioxide-containing gas. The building 11 has, for example, a living space where a person lives. Air (indoor air) in the living space tends to have a high carbon dioxide concentration due to human breathing. The indoor air may have a high carbon dioxide concentration due to the use of a gas stove, a heating appliance, or the like.

Next, the carbon dioxide recovery method according to Embodiment 1 will be described. FIG. 3 is a schematic diagram of a carbon dioxide recovery system capable of implementing the carbon dioxide recovery method according to Embodiment 1.

As shown in FIG. 3, a carbon dioxide recovery system 100 includes the carbon dioxide collection device 10 (see FIG. 1), a sewage treatment facility 20, and a carbon dioxide recovery device 30.

The sewage treatment facility 20 treats sewage F1 and purifies the sewage F1 so that the sewage F1 can be discharged into a public water area. The sewage is, for example, wastewater and rainwater. The wastewater is, for example, human waste, domestic wastewater, and industrial wastewater. The rainwater is, for example, precipitation and snowmelt water. The sewage F1 is collected from a household, an office, or the like to the sewage treatment facility 20 through a path 31. A plurality of the paths 31 are connected to the sewage treatment facility 20.

The carbon dioxide recovery device 30 separates at least a part of carbon dioxide contained in a treated fluid F2 of the sewage treatment facility 20 using a separation method such as adsorption separation, membrane separation, liquefaction separation, or electrochemical separation. The carbon dioxide recovery device 30 may adopt one of these separation methods or a combination of two or more of these separation methods. The treated fluid F2 is an intermediate treated fluid, a final treated fluid, or the like of the sewage treatment facility 20.

The carbon dioxide recovery device 30 using adsorption separation, for example, causes an adsorbing material to adsorb a specific component (for example, carbon dioxide) to separate the specific component. The adsorbing material may be a liquid adsorbing material or a solid adsorbing material. The adsorbing material can, for example, chemically adsorb or physically adsorb carbon dioxide. Examples of the liquid adsorbing material include amines.

Examples of the amines include an aliphatic amine, a polyamine, a polyimine, a cyclic amine, and an amidine compound. As the liquid adsorbing material, an aqueous solution of an alkali metal hydroxide can also be used. Examples of the alkali metal hydroxide include sodium hydroxide and potassium hydroxide.

Examples of the solid adsorbing material that physically adsorbs carbon dioxide include zeolite, activated carbon, diatomite, alumina, and silica gel. The solid adsorbing material may be granular, powdery, or the like. The granular shape is, for example, a bead shape (spherical) or a pellet shape (cylindrical). When a powdery adsorbing material is used, the adsorbing material may be supported on a surface of a carrier.

Examples of the adsorbing material that chemically adsorbs carbon dioxide include an adsorbing material in which amines, an alkali metal hydroxide, or the like is supported on a porous body such as activated carbon. Examples of the adsorbing material that chemically adsorbs carbon dioxide include calcium oxide.

The carbon dioxide recovery device 30 using membrane separation, for example, separates a specific component from other components using a separation membrane through which a component having a small molecular size can permeate. Specifically, for example, a separation membrane that allows carbon dioxide to selectively permeate is used. The separation membrane separates carbon dioxide from a mixed fluid containing carbon dioxide and other components.

Examples of the separation membrane include an organic membrane (a dendrimer membrane and the like) and an inorganic membrane (a zeolite membrane, a silica membrane, a carbon membrane, and the like).

The carbon dioxide recovery device 30 using liquefaction separation, for example, liquefies a specific component and separates the specific component from other components (gases). Specifically, for example, carbon dioxide is liquefied under high pressure and low temperature conditions and separated from other components (gases).

The carbon dioxide recovery device 30 using electrochemical separation, for example, ionizes a specific component (for example, carbon dioxide) and separates the specific component from other components.

Discharged water F3 discharged from the carbon dioxide recovery device 30 is discharged to the outside of the system. The discharged water F3 may be further subjected to purification treatment. The discharged water F3 may be discharged into a public water area (river, lake, harbor, coastal area, or the like).

A first example of the carbon dioxide recovery system 100 will be described.

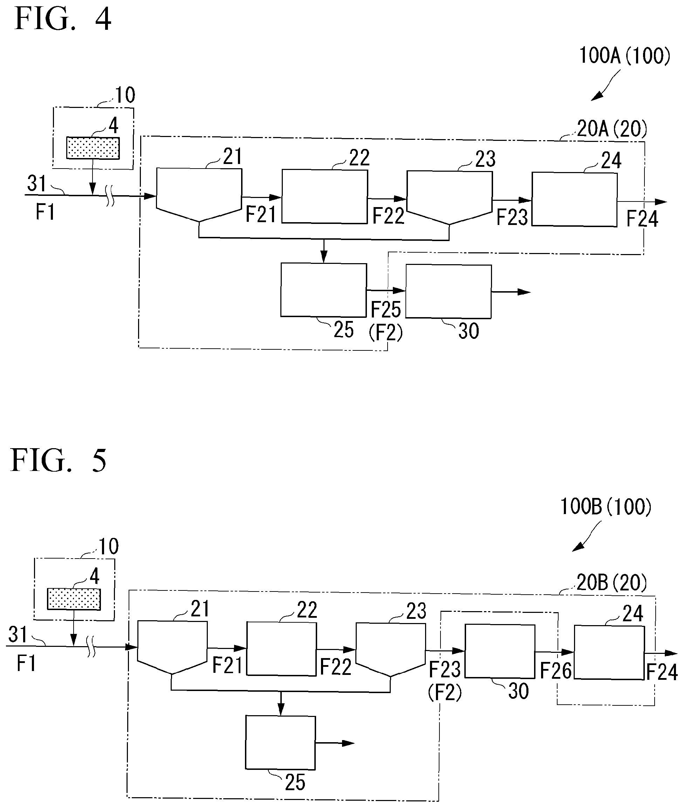

FIG. 4 is a schematic diagram of a first example (carbon dioxide recovery system 100A) of the carbon dioxide recovery system 100. As shown in FIG. 4, a sewage treatment facility 20A (sewage treatment facility 20) includes a first sedimentation tank 21, a biological treatment tank 22, a second sedimentation tank 23, an advanced treatment unit 24, and a digestion tank 25.

The first sedimentation tank 21 settles and separates solid matter (sludge) contained in the sewage F1.

The biological treatment tank 22 biologically treats intermediate treated water F21 that has passed through the first sedimentation tank 21. The second sedimentation tank 23 settles and separates solid matter (sludge) contained in intermediate treated water F22 that has passed through the biological treatment tank 22. The advanced treatment unit 24 performs advanced treatment on intermediate treated water F23 that has passed through the second sedimentation tank 23. The advanced treatment is, for example, treatment of removing nutrients. Treated water that has passed through the advanced treatment unit 24 is discharged to the outside of the system as final treated water F24.

When the absorbing material 4 is solid, the sludge obtained in the first sedimentation tank 21 and the second sedimentation tank 23 contains the absorbing material 4.

The digestion tank 25 performs digestion treatment on the sludge obtained in the first sedimentation tank 21 and the second sedimentation tank 23 through methane fermentation. Digestion gas F25 (treated fluid F2) generated by the digestion treatment contains carbon dioxide derived from the absorbing material 4, together with methane and carbon dioxide, which are fermentation products.

The carbon dioxide recovery device 30 is provided on a downstream side of the digestion tank 25.

The carbon dioxide recovery method according to Embodiment 1 has a first step (collection step), a second step (introduction step), and a third step (recovery step).

As shown in FIG. 1, in the first step (collection step), a carbon dioxide-containing gas, which is an exhaust gas from the ventilation device 12, is guided to the carbon dioxide absorption section 2 through the supply path 1. The carbon dioxide-containing gas is, for example, indoor air of the living space of the building 11. The indoor air tends to have a higher carbon dioxide concentration than outdoor air.

In the carbon dioxide absorption section 2, the absorbing material 4 absorbs carbon dioxide contained in the carbon dioxide-containing gas. As a result, carbon dioxide contained in the carbon dioxide-containing gas is taken into the absorbing material 4.

In the first step, the exhaust gas (carbon dioxide-containing gas) can be brought into contact with the absorbing material 4 of the carbon dioxide absorption section 2 by using an exhaust pressure of the exhaust gas from the ventilation device 12. As a result, the contact efficiency between the carbon dioxide-containing gas and the absorbing material 4 can be increased. Therefore, the carbon dioxide absorption efficiency of the absorbing material 4 can be improved.

As shown in FIG. 2, in the second step (introduction step), the absorbing material 4 is taken out from the exterior body 5.

As shown in FIG. 3, the taken-out absorbing material 4 is introduced into the sewage F1. Specifically, for example, the absorbing material 4 is poured into the path 31 through which the sewage F1 flows. The sewage F1 containing the absorbing material 4 is sent to the sewage treatment facility 20.

In the third step (recovery step), the digestion gas F25 (treated fluid F2) containing carbon dioxide derived from the absorbing material 4 is supplied to the carbon dioxide recovery device 30. The carbon dioxide recovery device 30 recovers carbon dioxide contained in the digestion gas F25 (treated fluid F2).

According to the carbon dioxide recovery method according to Embodiment 1, the carbon dioxide collected by the absorbing material 4 is introduced into the sewage, so that carbon dioxide from the absorbing material 4 containing carbon dioxide collected at a household, an office, or the like can be collectively recovered at the sewage treatment facility 20. Therefore, the recovery efficiency of carbon dioxide can be improved.

According to this carbon dioxide recovery method, indoor air, which tends to have a high carbon dioxide concentration, is used as a carbon dioxide-containing gas, so that the recovery efficiency of carbon dioxide can be improved.

According to this carbon dioxide recovery method, carbon dioxide can be recovered from the digestion gas obtained in the digestion tank 25, so that the recovery efficiency of carbon dioxide can be improved.

A second example of the carbon dioxide recovery system 100 will be described.

FIG. 5 is a schematic diagram of a second example (carbon dioxide recovery system 100B) of the carbon dioxide recovery system 100. As shown in FIG. 5, a sewage treatment facility 20B (sewage treatment facility 20) includes a first sedimentation tank 21, a biological treatment tank 22, a second sedimentation tank 23, an advanced treatment unit 24, and a digestion tank 25.

The carbon dioxide recovery system 100B is different from the carbon dioxide recovery system 100A (see FIG. 4) in that the carbon dioxide recovery device 30 is provided between the second sedimentation tank 23 and the advanced treatment unit 24, not on the downstream side of the digestion tank 25.

Intermediate treated water F23 (treated fluid F2) that has passed through the second sedimentation tank 23 is supplied to the carbon dioxide recovery device 30. In the carbon dioxide recovery device 30, carbon dioxide is recovered from the absorbing material 4 contained in the intermediate treated water F23. When the absorbing material 4 is a solid, for example, the absorbing material 4 is collected from the intermediate treated water F23, and then carbon dioxide is recovered from the absorbing material 4. In order to collect the absorbing material 4 from the intermediate treated water F23, a solid-liquid separation method such as sedimentation separation or flotation separation can be adopted.

Intermediate treated water F26 that has passed through the carbon dioxide recovery device 30 is supplied to the advanced treatment unit 24. Treated water that has passed through the advanced treatment unit 24 is discharged to the outside of the system as final treated water F24.

According to this carbon dioxide recovery method, the carbon dioxide collected by the absorbing material 4 is introduced into the sewage, so that carbon dioxide collected at a household, an office, or the like can be collectively recovered at the sewage treatment facility 20. Therefore, the recovery efficiency of carbon dioxide can be improved.

According to this carbon dioxide recovery method, carbon dioxide is recovered from the intermediate treated water F23 that has passed through the second sedimentation tank 23, so that carbon dioxide can be efficiently recovered even when the absorbing material 4 is a liquid.

### Embodiment 2.

Next, a carbon dioxide recovery method according to Embodiment 2 will be described. The same configurations as those in the other embodiments are denoted by the same reference numerals, and a description thereof will be omitted.

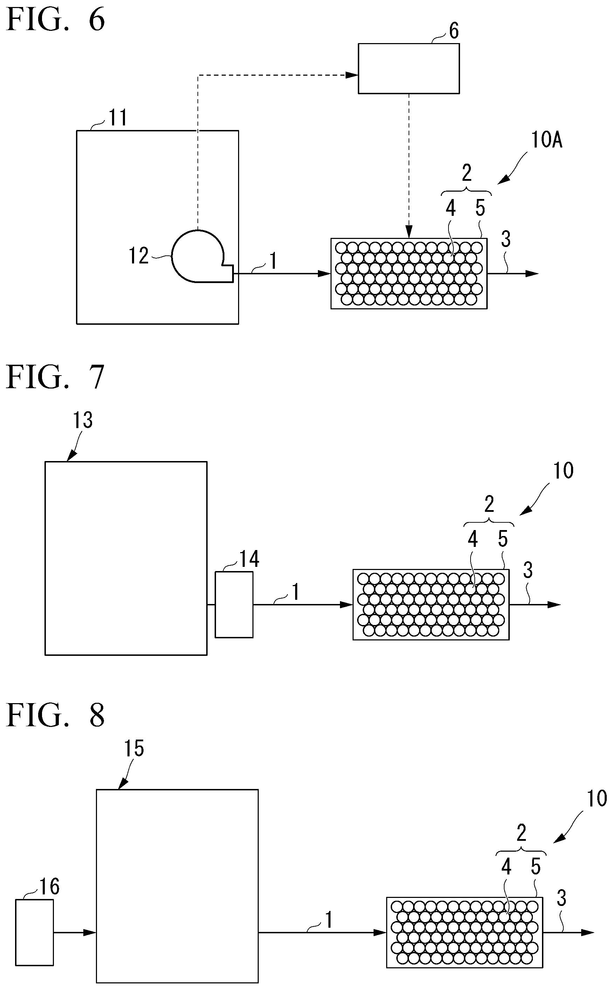

FIG. 6 is a schematic diagram showing the carbon dioxide recovery method according to Embodiment 2. As shown in FIG. 6, a carbon dioxide collection device 10A includes a supply path 1, a carbon dioxide absorption section 2, a discharge path 3, and a control unit 6. The carbon dioxide collection device 10A is different from the carbon dioxide collection device 10 (see FIG. 1) in that the control unit 6 is provided.

The control unit 6 performs the introduction of the absorbing material 4 into the sewage F1 when the carbon dioxide absorption amount of the absorbing material 4 reaches a predetermined set value. The carbon dioxide absorption amount can be calculated from a carbon dioxide concentration and a flow rate of the carbon dioxide-containing gas.

Since the carbon dioxide absorption amount is proportional to the carbon dioxide concentration and the flow rate, the carbon dioxide absorption amount can be calculated, for example, from the carbon dioxide concentration and the flow rate of the carbon dioxide-containing gas. The flow rate of the carbon dioxide-containing gas can also be calculated from a rotation speed of the blower (fan) of the ventilation device 12.

When the carbon dioxide concentration of the carbon dioxide-containing gas fluctuates, the carbon dioxide concentration of the carbon dioxide-containing gas is measured by a carbon dioxide concentration sensor installed in the supply path 1. The control unit 6 can calculate the carbon dioxide absorption amount based on a measured value of the carbon dioxide concentration sensor. When the flow rate of the carbon dioxide-containing gas fluctuates, the flow rate of the carbon dioxide-containing gas is measured by a flowmeter installed in the supply path 1. The control unit 6 can calculate the carbon dioxide absorption amount based on a measured value of the flowmeter.

When the carbon dioxide absorption amount of the absorbing material 4 reaches the set value, the control unit 6 can, for example, open the opening of the exterior body 5 and introduce the absorbing material 4 into the path 31 (see FIG. 3).

According to the carbon dioxide recovery method according to Embodiment 2, the carbon dioxide collected by the absorbing material 4 is introduced into the sewage, so that carbon dioxide collected at a household, an office, or the like can be collectively recovered at the sewage treatment facility 20. Therefore, the recovery efficiency of carbon dioxide can be improved.

In this carbon dioxide recovery method, the absorbing material 4 is introduced into the sewage F1 when the carbon dioxide absorption amount of the absorbing material 4 reaches the set value, so that the operation of introducing the absorbing material 4 into the sewage F1 can be easily automated. Further, the absorption capacity of the absorbing material 4 can be used without waste, and the carbon dioxide absorption efficiency of the absorbing material 4 can be improved.

In this carbon dioxide recovery method, the carbon dioxide absorption amount of the absorbing material 4 is calculated, so that time to replenish the absorbing material 4 can be easily grasped.

### Embodiment 3.

Next, a carbon dioxide recovery method according to Embodiment 3 will be described. The same configurations as those in the other embodiments are denoted by the same reference numerals, and a description thereof will be omitted.

FIG. 7 is a schematic diagram showing the carbon dioxide recovery method according to Embodiment 3. As shown in FIG. 7, one end of the supply path 1 is connected to an outdoor unit 14 of an air conditioning device 13. The outdoor unit 14 has a fan (blower) that supplies air.

The air conditioning device 13 is an example of a supply source of the carbon dioxide-containing gas.

In the first step (collection step), air (carbon dioxide-containing gas), which is an exhaust gas discharged from the outdoor unit 14, is guided to the carbon dioxide absorption section 2 through the supply path 1. In the carbon dioxide absorption section 2, the absorbing material 4 absorbs carbon dioxide contained in the carbon dioxide-containing gas.

In this carbon dioxide recovery method, an exhaust pressure of the outdoor unit 14 is used, so that the power loss in the first step can be suppressed.

In this carbon dioxide recovery method, the exhaust gas (carbon dioxide-containing gas) can be brought into contact with the absorbing material 4 of the carbon dioxide absorption section 2 by using the exhaust pressure of the exhaust gas from the outdoor unit 14. As a result, the contact efficiency between the carbon dioxide-containing gas and the absorbing material 4 can be increased. Therefore, the carbon dioxide absorption efficiency of the absorbing material 4 can be improved.

### Embodiment 4.

Next, a carbon dioxide recovery method according to Embodiment 4 will be described. The same configurations as those in the other embodiments are denoted by the same reference numerals, and a description thereof will be omitted.

FIG. 8 is a schematic diagram showing the carbon dioxide recovery method according to Embodiment 4. As shown in FIG. 8, a combustor 15 includes an air supply device 16. The air supply device 16 supplies air for combustion support in the combustor 15. One end of the supply path 1 is connected to the combustor 15. Examples of the combustor 15 include a gas water heater, a gas boiler, and a kerosene fan heater. The combustor 15 is an example of a supply source of the carbon dioxide-containing gas. The combustor 15 is used, for example, in a living space.

**In** the first step (collection step), an exhaust gas (carbon dioxide-containing gas) from the combustor 15 is guided to the carbon dioxide absorption section 2 through the supply path 1. **In** the carbon dioxide absorption section 2, the absorbing material 4 absorbs carbon dioxide contained in the carbon dioxide-containing gas.

**In** this carbon dioxide recovery method, an exhaust gas (carbon dioxide-containing gas) having a large discharge volume and a high carbon dioxide concentration can be used, so that the absorption efficiency of carbon dioxide can be improved.

**In** this carbon dioxide recovery method, the carbon dioxide-containing gas can be brought into contact with the absorbing material 4 of the carbon dioxide absorption section 2 by using an exhaust pressure from the air supply device 16. As a result, the contact efficiency between the carbon dioxide-containing gas and the absorbing material 4 can be increased. Therefore, the carbon dioxide absorption efficiency of the absorbing material 4 can be improved.

### Embodiment 5.

Next, a carbon dioxide recovery method according to Embodiment 5 will be described. The same configurations as those in the other embodiments are denoted by the same reference numerals, and a description thereof will be omitted.

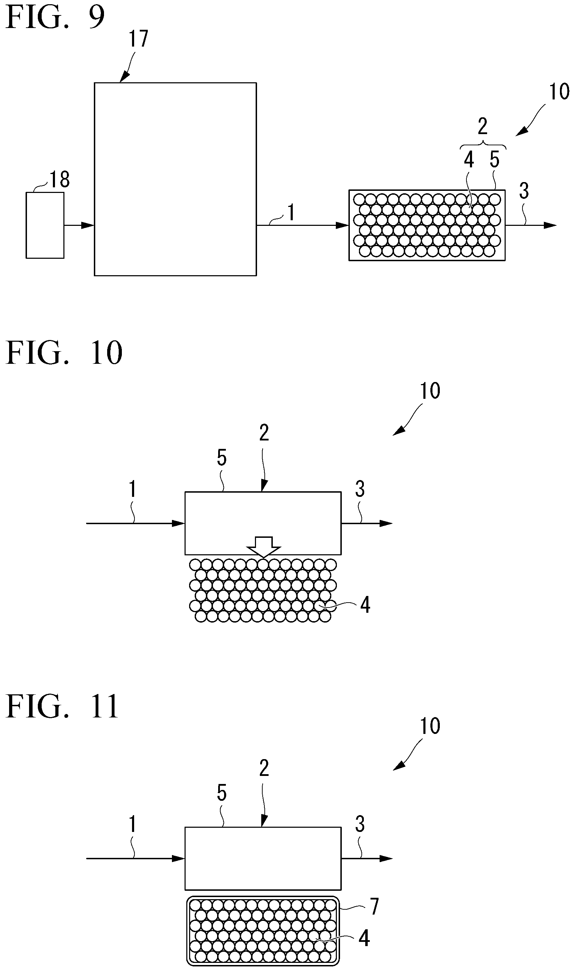

FIG. 9 is a schematic diagram showing the carbon dioxide recovery method according to Embodiment 5. As shown in FIG. 9, a fuel cell system 17 includes an air supply device 18. The fuel cell system 17 can generate electricity through a reaction between air supplied from the air supply device 18 and a reformed gas. One end of the supply path 1 is connected to the fuel cell system 17. The fuel cell system 17 is an example of a supply source of the carbon dioxide-containing gas.

**In** the first step (collection step), carbon dioxide-containing gas, which is an exhaust gas discharged from the fuel cell system 17, is guided to the carbon dioxide absorption section 2 through the supply path 1. **In** the carbon dioxide absorption section 2, the absorbing material 4 absorbs carbon dioxide contained in the carbon dioxide-containing gas.

In this carbon dioxide recovery method, carbon dioxide can be collected from a high-concentration carbon dioxide-containing gas from the fuel cell system 17, so that the carbon dioxide discharge volume can be reduced.

In this carbon dioxide recovery method, the carbon dioxide-containing gas can be brought into contact with the absorbing material 4 of the carbon dioxide absorption section 2 by using an exhaust pressure from the air supply device 18. As a result, the contact efficiency between the carbon dioxide-containing gas and the absorbing material 4 can be increased. Therefore, the carbon dioxide absorption efficiency of the absorbing material 4 can be improved.

### Embodiment 6.

Next, a carbon dioxide recovery method according to Embodiment 6 will be described. The same configurations as those in the other embodiments are denoted by the same reference numerals, and a description thereof will be omitted.

FIGS. 10 and 11 are schematic diagrams showing the carbon dioxide recovery method according to Embodiment 6. As shown in FIGS. 10 and 11, in this carbon dioxide recovery method, in the second step (introduction step), when the absorbing material 4 is introduced into the sewage, the absorbing material 4 is taken out from the exterior body 5 and then accommodated in a container 7. That is, the absorbing material 4 is accommodated in the container 7 and is introduced into the sewage. Specifically, for example, the container 7 in which the absorbing material 4 is accommodated is poured into the path 31 (see FIG. 3) through which the sewage F1 flows.

The container 7 is, for example, a bag or a box. The bag is formed of, for example, a plastic sheet. The box is formed of, for example, a plastic plate. It is desirable that the container 7 is waterproof and can seal the absorbing material 4 in a liquid-tight manner.

In the third step (recovery step), the absorbing material 4 is recovered in a state of being accommodated in the container 7. Therefore, safety can be improved regardless of the properties of the absorbing material 4.

For example, the absorbing material 4 that may affect a human body can also be used without compromising safety.

The technical scope of the present invention is not limited to the above embodiments, and various modifications can be made without departing from the gist of the present invention.

For example, one or a plurality of thickeners may be provided in the path that guides the treated fluid F2 (see FIG. 3) to the carbon dioxide recovery device. The thickener increases the carbon dioxide concentration in the treated fluid F2 by using, for example, a method such as adsorption separation, membrane separation, liquefaction separation, or electrochemical separation. Therefore, it is possible to improve the recovery efficiency of carbon dioxide in the carbon dioxide recovery device.

In FIGS. 4 and 5, the carbon dioxide recovery device 30 is provided on the downstream side of the digestion tank 25 in the sewage treatment facility 20 or between the second sedimentation tank 23 and the advanced treatment unit 24, but the installation position of the carbon dioxide recovery device is not particularly limited.

The carbon dioxide recovery device can be provided at any position in the sewage treatment facility.

For example, the carbon dioxide recovery device may be provided on an upstream side of the first sedimentation tank. The carbon dioxide recovery device may be provided between the first sedimentation tank and the biological treatment tank. The carbon dioxide recovery device may be provided between the biological treatment tank and the second sedimentation tank. The carbon dioxide recovery device may be provided on the downstream side of the advanced treatment unit. The carbon dioxide recovery device may be provided between the first sedimentation tank or the second sedimentation tank and the digestion tank.

### List of Reference Signs

- 4: Absorbing material
- 7: Container
- 11: Building
- 12: Ventilation device
- 13: Air conditioning device
- 14: Outdoor unit
- 15: Combustor
- 16: Air supply device
- 17: Fuel cell system
- 18: Air supply device

## Claims

1. A carbon dioxide recovery method comprising:
a step of having an absorbing material absorb carbon dioxide from a carbon dioxide-containing gas;
a step of introducing the absorbing material that has absorbed the carbon dioxide into sewage; and
a step of recovering the carbon dioxide from the absorbing material introduced into the sewage.

2. The carbon dioxide recovery method according to Claim 1,
wherein, in the step of introducing the absorbing material into the sewage, the absorbing material is introduced when a carbon dioxide absorption amount of the absorbing material reaches a predetermined set value.

3. The carbon dioxide recovery method according to Claim 1 or 2,
wherein the carbon dioxide-containing gas is an exhaust gas discharged from a ventilation device for indoor ventilation of a building, and
in the step of having the absorbing material absorb the carbon dioxide from the carbon dioxide-containing gas, the carbon dioxide-containing gas is brought into contact with the absorbing material by using an exhaust pressure of the ventilation device.

4. The carbon dioxide recovery method according to Claim 1 or 2,
wherein the carbon dioxide-containing gas is an exhaust gas discharged from an outdoor unit of an air conditioning device, and
in the step of having the absorbing material absorb the carbon dioxide from the carbon dioxide-containing gas, the carbon dioxide-containing gas is brought into contact with the absorbing material by using an exhaust pressure of the outdoor unit.

5. The carbon dioxide recovery method according to Claim 1 or 2,
wherein the carbon dioxide-containing gas is an exhaust gas discharged from a combustor including an air supply device that supplies air for combustion support, and
in the step of having the absorbing material absorb the carbon dioxide from the carbon dioxide-containing gas, the carbon dioxide-containing gas is brought into contact with the absorbing material by using an air supply pressure of the air supply device.

6. The carbon dioxide recovery method according to Claim 1 or 2,
wherein the carbon dioxide-containing gas is an exhaust gas discharged from a fuel cell system including an air supply device that supplies air, and
in the step of having the absorbing material absorb the carbon dioxide from the carbon dioxide-containing gas, the carbon dioxide-containing gas is brought into contact with the absorbing material by using an air supply pressure of the air supply device.

7. The carbon dioxide recovery method according to Claim 2,
wherein the carbon dioxide absorption amount of the absorbing material is calculated from a carbon dioxide concentration and a flow rate of the carbon dioxide-containing gas.

8. The carbon dioxide recovery method according to any one of Claims 1 to 7,
wherein the sewage is collected in a sewage treatment facility, and
in the step of recovering the carbon dioxide from the absorbing material, the absorbing material is collected in the sewage treatment facility, and the carbon dioxide is recovered from the collected absorbing material.

9. The carbon dioxide recovery method according to any one of Claims 1 to 8,
wherein, in the step of introducing the absorbing material into the sewage, the absorbing material is accommodated in a container and is introduced into the sewage, and
in the step of recovering the carbon dioxide from the absorbing material, when collecting the absorbing material, the absorbing material is collected in a state of being accommodated in the container.
